(19)

Europäisches
Patentamt
European
Patent Office
Office européen
des brevets

(11) **EP 3 913 447 A1**

(12) **EUROPEAN PATENT APPLICATION**

(43) Date of publication:
**24.11.2021 Bulletin 2021/47**

(51) Int Cl.:
**G05B 19/18** (2006.01)        **B23Q 15/00** (2006.01)
**B24B 5/42** (2006.01)        **B24B 19/12** (2006.01)

(21) Application number: **20175854.7**

(22) Date of filing: **20.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Num Industry Alliance AG**
**9053 Teufen (CH)**

(72) Inventor: **VALLE, Ivano**
**12042 Bra (CN) (IT)**

(74) Representative: **Mertzlufft-Paufler, Cornelius et al**
**Maucher Jenkins**
**Patent- und Rechtsanwälte**
**Urachstraße 23**
**79102 Freiburg im Breisgau (DE)**

(54) **PROCESSING MACHINE AND METHOD FOR OPERATING A PROCESSING MACHINE**

(57)    A Method for operating a processing machine (1), wherein a workpiece (5) is rotated in the processing machine (1) along an axis of rotation (Cm) and a tool (2; 6; 22) for processing the workpiece (5) is moved along a first axis (Xm) that is perpendicular to the axis of rotation (Cm) and a second axis (Zm) that is parallel to the axis of rotation (Cm). During operation the coordinates of a contact point (P) between the tool and the workpiece (5) with respect to the axis of rotation (Cm), the first axis (Xm) and a third axis (Ym) that is perpendicular to the first axis (Xm) and the axis of rotation (Cm) is calculated. The tool is the moved along the three axes according to the calculated coordinates. (Fig. 1)

Fig. 1

EP 3 913 447 A1

**Description**

**TECHNICAL FIELD**

The invention relates to a processing machine, for example a grinding machine, that uses a spindle to rotatably drive a workpiece. A tool, for example a grinding wheel, is moved perpendicular to the spindle axis in order to process the workpiece.

**BACKGROUND**

In the following the term big tool refers to a tool, for example a grinding wheel, with a diameter larger than the diameter of the workpiece 5. Whereas the term small tool refers to a tool with a smaller diameter than the diameter of the workpiece.

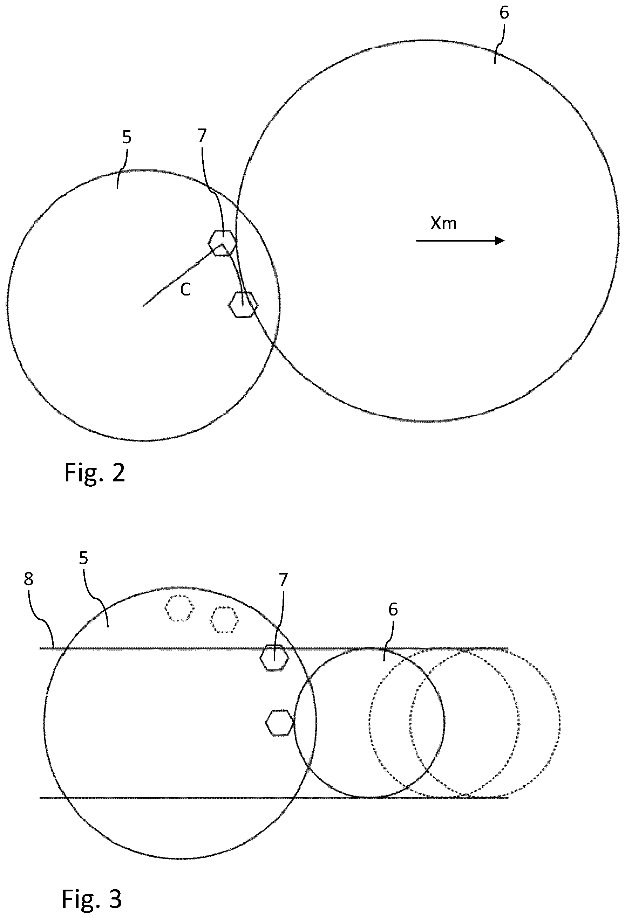

Fig. 2 illustrates that with a big tool 6 it is possible to process eccentric shapes, for example the hexagonal stub 7. During a whole rotation of the workpiece 5 along the Cm axis all the hexagon points are exposed to the tool 6, allowing the complete machining. An eccentric shape is any shape that is not rotationally symmetric to the rotation axis Cm of the workpiece. As depicted, the big tool 6 can reach the stub 7 at all positions with movement only in Xm direction.

Fig. 3 illustrates the problem, when using a small tool 2 that moves along the Xm axis only. In this case, an eccentric shape like the hexagonal stub 7 cannot be reached by the small tool 2 in some positions outside the marked tool corridor 8. The stub 7 in the positions outside this corridor 8 is depicted in dashed lines.

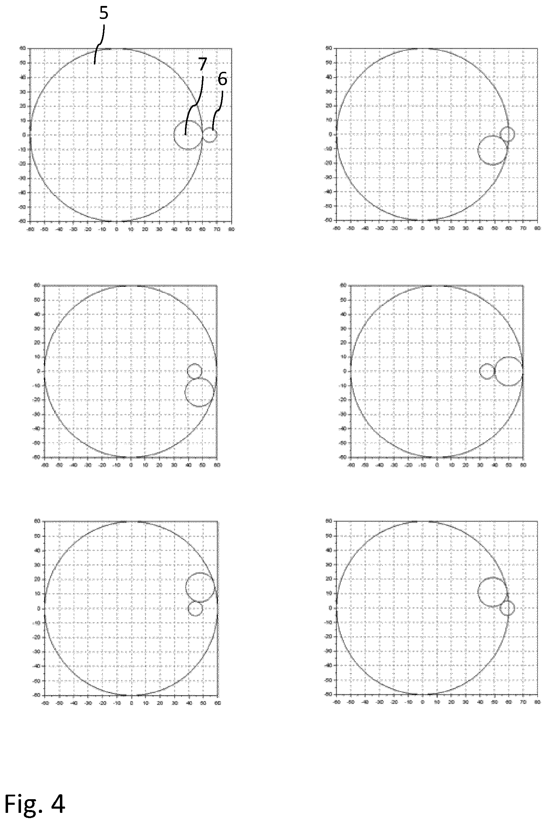

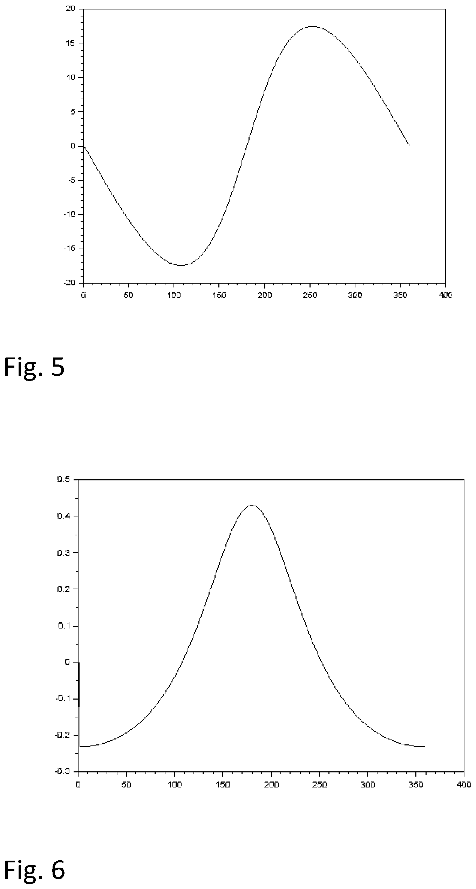

The Fig. 4 illustrates the calculated position for the coordinates Xm and Cm of a contact point P between a small tool 2 and the workpiece 5 with plain Cartesian to polar conversion in the points 0°, 60°, 120°, 180°, 240°, 300° along a circular path, where the small tool 2 moves only along the Xm axis. The Figures 5 and 6 illustrate the Cm axis position and the Cm axis velocity of the small tool 2 respectively. It can be seen that the positions of the Cm axis are restricted to the range [-18°,18°] and the Cm axis velocity changes continuously and inverts the direction subjecting the machine to continuous acceleration and inversion. This leads to negative consequences like vibrations and/or imprecise machining. In fact, the Cm axis oscillates around the zero position without making a complete turn.

Increasing the tool radius may alleviate these effects, but the problems never completely disappear.

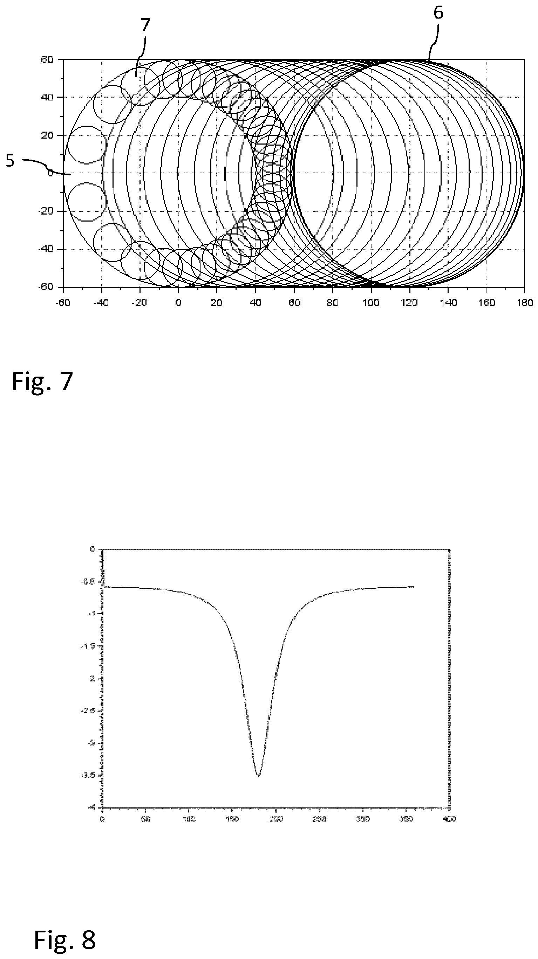

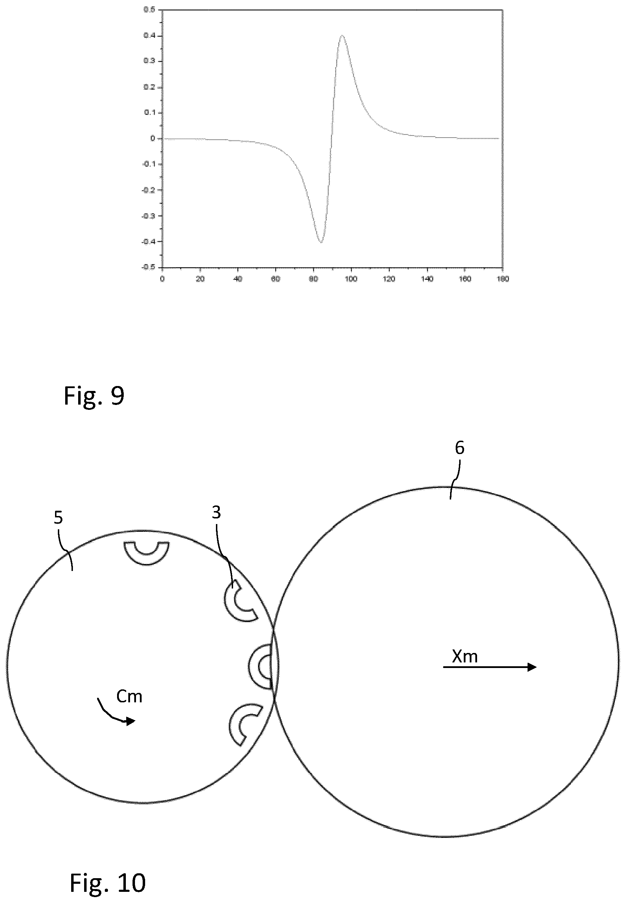

Fig. 7 illustrates the Cm position of a big tool 6 along a circular path calculated every 10 degrees. It can be seen that the grinding contour positions are not uniformly distributed along the Cm axis rotation. Instead they are closer together in the right side and less close on the left side. This means that the Cm axis velocity is not constant, as depicted in Fig. 8. The velocity has a quite constant value when the tool grinds on the right side of the workpiece. But then it accelerates fast to reach the left side where the acceleration has an abrupt inversion as it is depicted in Fig. 9.

This behavior is also strongly unwanted because it subjects the rotating workpiece to continuous strong acceleration change causing vibrations on the machine and bad quality surface finishing. These negative effects are even more pronounced for unbalanced workpieces. Here increasing the tool radius may also alleviate these effects, but the problems never completely disappear.

For most applications using a big tool 6 seems the obvious choice in order to reduce the described negative effects. But there exist several reasons to use a small tool. The most critical is when concave shapes have to be machined. In this case if the tool is not small enough, the complete contour path couldn't be ground and a different tool have to be used on a suitable machine. Fig. 10 illustrates that the concave stub 3 cannot be machined with the big tool 6.

The object of the invention is to improve machining by eliminating or reducing the described negative effects.

**BRIEF SUMMARY OF SOME EXAMPLES**

This object is solved by the method according to claim 1.

According to one aspect, a workpiece is rotated in the processing machine along an axis of rotation Cm and a tool for processing the workpiece is moved along a first axis Xm that is transversal, in particular perpendicular, to the axis of rotation Cm and a second axis Zm that is parallel to the axis of rotation Cm. The method comprises: calculating during operation the coordinates of a contact point P between the tool and the workpiece with respect to the axis of rotation Cm, the first axis Xm and a third axis Ym that is transversal, in particular perpendicular, to the first axis Xm and the axis of rotation Cm; and moving the tool along the three axes according to the calculated coordinates.

Thus, the additional coordinate for the Ym axis is calculated from existing data. There is no need to change the programmed data for the workpieces.

Further, when grinding a circular shape the Cm axis speed is constant, eliminating the problems caused by accelerating the tool. Even for non-circular shapes the vibrations or other negative effects are significantly reduced. Further, an eccentric shape can be reached in all positions, even when using a small tool.

According to one aspect, calculating the coordinates of the contact point P comprises:

> calculating a coordinate of the tool for the third axis Ym;
> calculating the two solutions for the coordinates for the axis of rotation Cm and the first axis Xm of the contact point P between the tool and the workpiece; and

selecting the correct solution from the two calculated solutions.

According to one aspect, calculating a coordinate of the tool comprise:
calculating the coordinate for the third axis Ym of the center of the tool Ya to equal the coordinate for the third axis Ym of the center of the machined stub of the workpiece.

According to one aspect, calculating the two solutions for the coordinates comprise:
calculating the polar coordinates of the contact point P between the tool and the workpiece based on the Cartesian coordinates of the stub and the calculated coordinate Ya for the third axis Ym of the center of the tool.

According to one aspect, the second solution is calculated based on the first solution of polar coordinates.

According to one aspect, selecting the correct solution is at least partially based on which side of the workpiece the tool is located.

According to one aspect, the diameter of the tool is smaller than the diameter of the workpiece and/or a stub of the workpiece. A small tool enables the processing of concave and/or eccentric shapes. Due to the additional movement in the Ym axis, all negative effects of using a small tool are eliminated.

According to one aspect, the processing machine is a lathe or a grinding machine; and/or the tool is a grinding wheel.

Another aspect comprises a processing machine, wherein a workpiece is rotated in the processing machine along an axis of rotation Cm and a tool for processing the workpiece is moved along a first axis Xm that is transversal, in particular perpendicular, to the axis of rotation Cm and a second axis Zm that is parallel to the axis of rotation Cm, comprising: calculating during operation the coordinates of a contact point P between the tool and the workpiece with respect to the axis of rotation Cm, the first axis Xm and a third axis Ym that is transversal, in particular perpendicular, to the first axis Xm and the axis of rotation Cm; and moving the tool along the three axes according to the calculated coordinates.

According to one aspect, the processing machine is a lathe or a grinding machine.

**BRIEF DESCRIPTION OF THE DRAWINGS**

The disclosed aspects will hereinafter be described in conjunction with the appended drawings, provided to illustrate and not to limit the disclosed aspects, wherein like designations denote like elements, and in which:

Fig. 1: illustrates a lathe with a grinding wheel as an example for a processing machine,

Fig. 2: illustrates how an out of center stub is grinded with a large tool according to the prior art,

Fig. 3: illustrates the problem when grinding an eccentric stub with a small tool according to the prior art,

Fig. 4: illustrates the calculated position for Xm and Cm with plain Cartesian to polar conversion in the points 0°, 60°, 120°, 180°, 240°, 300° along a circular path, with a small tool according to the prior art,

Fig. 5: illustrates the Cm axis positions during the machining with a small tool Xm according to the prior art,

Fig. 6: illustrates the Cm axis velocity during the machining with a small tool according to the prior art,

Fig. 7: illustrates the non-uniform movement of a contact point between the tool and an eccentric shape on the Cm axis along a circular path using a big tool according to the prior art,

Fig. 8: illustrates the Cm axis velocity during the machining with a big tool according to the prior art,

Fig. 9: illustrates the Cm axis acceleration during the machining with a big tool according to the prior art,

Fig. 10: illustrates the problem of grinding small or concave stubs with a big tool according to the prior art,

Fig. 11: illustrates the grinding of a concave stub with a small tool,

Fig. 12: illustrates the calculated position for Xm and Cm with plain Cartesian to polar conversion in the points 0°, 60°, 120°, 180°, 240°, 300° along a circular path, with a too small tool,

Fig. 13: illustrates the Cm axis velocity during the machining,

Fig. 14: illustrates the Ym axis velocity during the machining,

Fig. 15: illustrates the uniform movement of a contact point between the tool and an eccentric shape on the Cm axis along a circular path using a small tool,

Fig. 16: illustrates the calculation of a coordinate of the tool for the third axis,

Fig. 17: illustrates the calculation of the first solution,

Fig. 18: illustrates the calculation of the second solution based on the first solution,

Fig. 19: illustrates the two solutions for a specific situation,

Fig. 20: illustrates a method according to one aspect, and

Fig. 21: illustrates a method according to another aspect.

## DETAILED DESCRIPTION

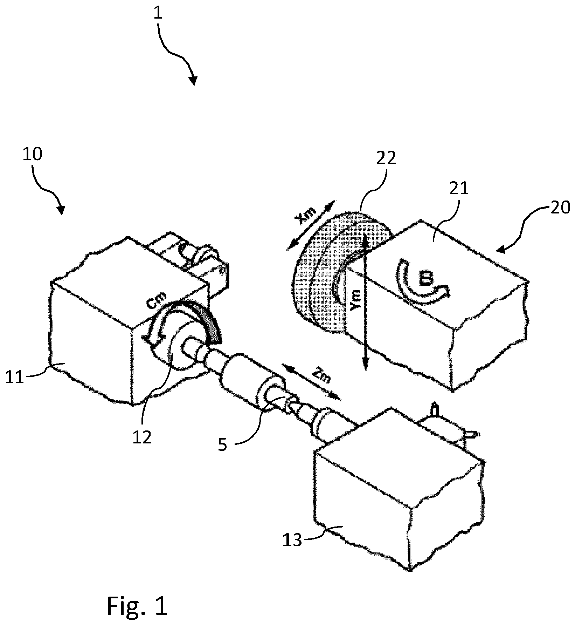

Fig. 1 illustrates a processing machine 1 according to one aspect comprising a lathe 10 and a tool unit 20. The lathe 10 comprises a headstock 11 with a motor for rotatably driving a spindle 12. In the example a workpiece 5 is fixed between the spindle 12 and a footstock 13. During operation, the spindle 12 rotates the workpiece 5 along an axis of rotation Cm of the spindle 12.

The tool unit 20 comprises a wheelhead 21 with a motor for rotatably driving a tool 22, for example a grinding wheel. The tool unit 20 is movable along a first axis Xm that is perpendicular to the rotating axis Cm of the spindle 12 and along a second axis Zm that is parallel to the rotating axis Cm.

According to one aspect the tool unit 20 is also movable along a third axis Ym, that is perpendicular to the first axis Xm and the second axis Zm.

Optionally the tool unit 2 can rotate along an axis B that is parallel to the third axis Ym. In another aspect the tool unit 20 can be fixed and the tool 22 can be movable along the Xm, Ym and B axes.

Of course, the processing machine 1 is not limited to a lathe. It can be any machine where a workpiece is rotating (on a lathe or grinding machine for example) and eccentric shapes have to be machined.

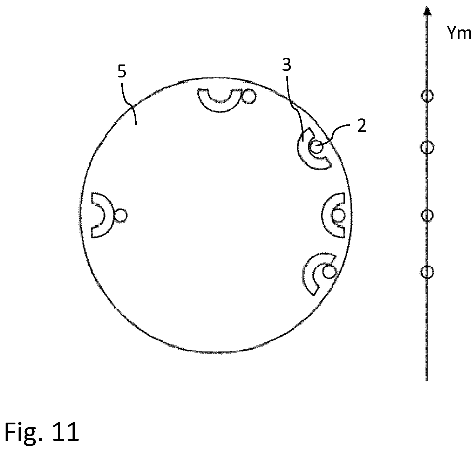

Fig. 11 illustrates the grinding of a concave stub 3 with a small tool 2 according to one aspect. Compared to Fig. 3 there is no tool corridor and all positions can be reached by additionally moving the small tool 3 along the Ym axis.

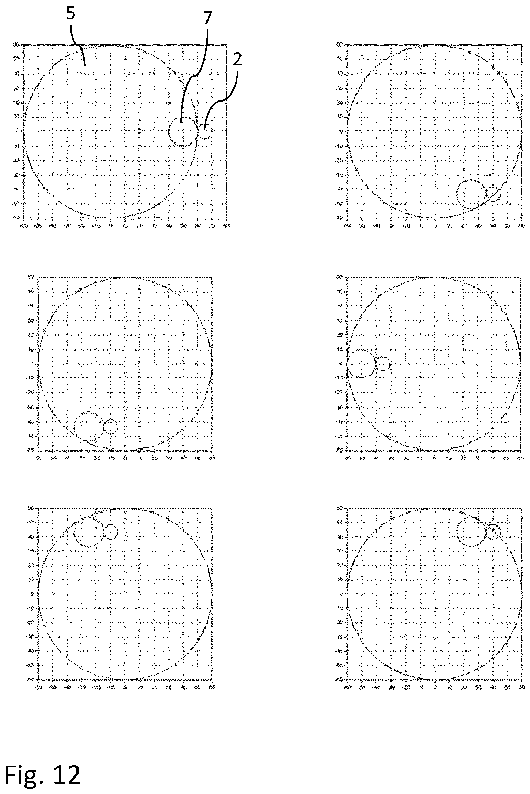

Fig. 12 illustrates the same positions as Fig. 4 calculated according to one aspect. It can clearly be seen that the small tool moves along the additional Ym axis. It is also clearly shown that the position of the small tool 2 is always in the best position for the machining.

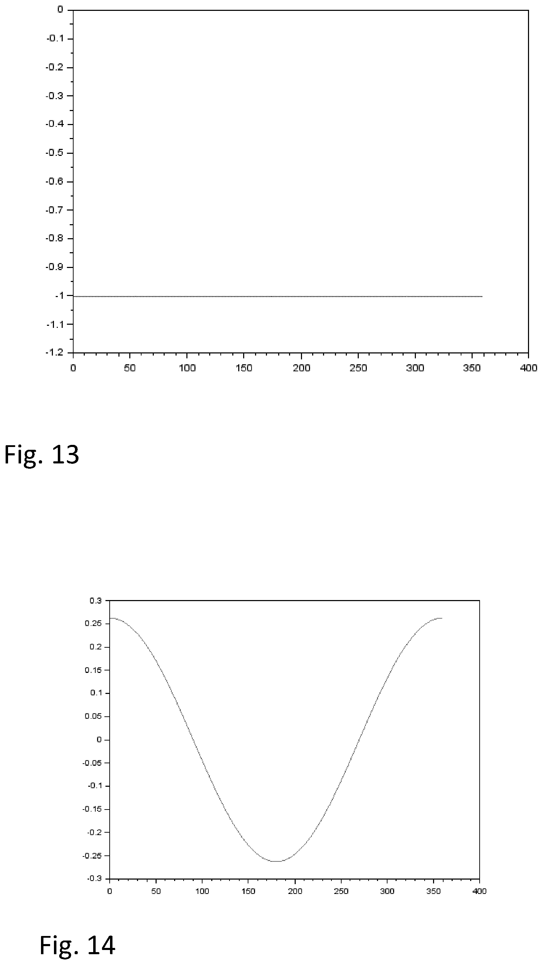

The velocity of the Cm axis executing a circle is constant as shown in Fig. 13. Therefore, the best machining condition is reached. Vibrations and other negative effects, resulting from acceleration or inversion of movements of the tool are eliminated for circular shapes. For other shapes, for example concave shapes, these negative effects are at least minimized.

Fig. 14 shows the Ym axis velocity to be a sinusoid which is infinitely derivable, which is the best dynamic condition.

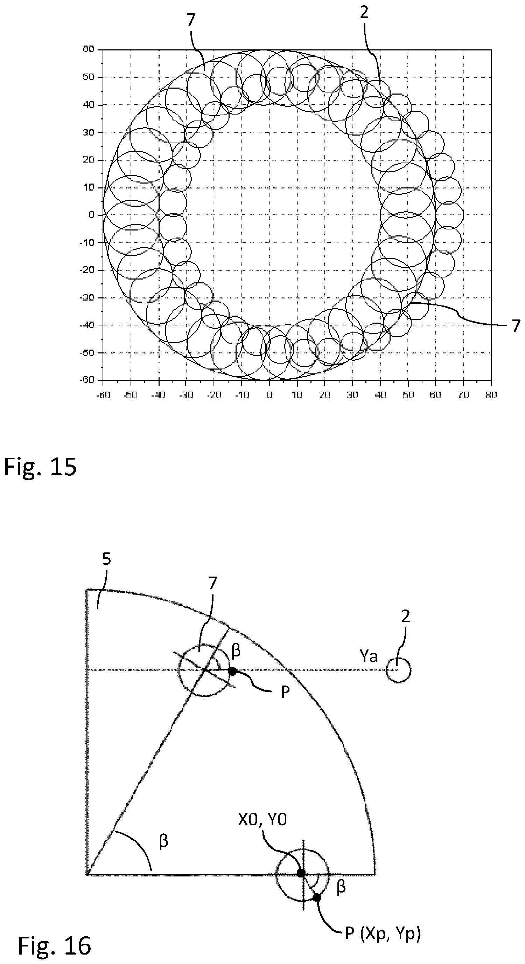

Fig. 15 shows the complete revolution of the workpiece 5 and the small tool 2. Compared to Fig. 7, it is obvious that the positions along the Cm axis are uniformly distributed as could be expected from the constant velocity.

According to one aspect the method for calculating the coordinates of a contact point P between the tool and the workpiece comprises three sub steps as following:

    1. Calculation of the Y position.
    2. Calculation of the two solution pairs.
    3. Choice of correct solution.

1. Calculation of the Y position

Fig. 16 shows a workpiece 5 with an eccentric circular stub 7 and a small tool 2 for illustrating the calculation. There is not a unique value for a suitable Y position for the machining.

There are usually two constrains: the programmed positions of Xp and Yp of a contact point P. And there are three degrees of freedom: the coordinates for Cm, Xm and Ya. In this approach according to one aspect Ya will be fixed at a certain value. Then the positions for Xm and Cm can be calculated.

The best position for Ya is, when the centre of the small tool 2 and the centre of the stub 7 are on the same height.

Ya is calculated with this formula:

$$\beta = -\tan^{-1}\left(\frac{Y_P}{X_P}\right)$$

$$\beta \in (-\pi, \pi)$$

$$Y_a = Y_0 * \sin\beta$$

Where Y0 is the coordinate of the stub centre.

2. Calculation of the two solution pairs

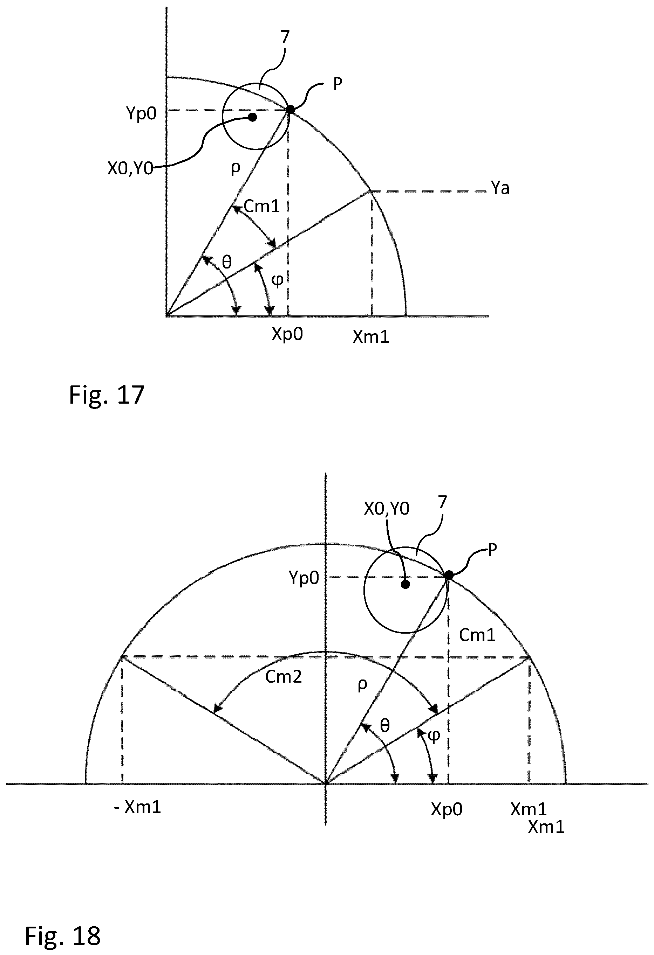

In this sub step the machine coordinates (Xm, Cm) are calculated from the given values for Xp, Yp (programmed coordinates) and the previously calculated value for Ya (Y assisted value). The calculation is explained below with reference to Fig. 17.

First the programmed point is transformed from the local frame to the machine frame:

$$X_{p0} = X_p + X_0$$

$$Y_{p0} = Y_p + Y_0$$

Then the distance between the rotation centre and the point P is calculated:

$$\rho = \sqrt{X_{p0}^{\,2} + Y_{p0}^{\,2}}$$

Now it is possible to calculate the first solution for the X axis Xm1:

$$X_{m1} = \sqrt{\rho^2 - Y_a^{\,2}}$$

To calculate the Cm position first the two angles theta and phi are calculated:

$$\theta = \tan^{-1}\frac{Y_{p0}}{X_{p0}}$$

$$\varphi = \tan^{-1}\frac{Y_a}{X}$$

And finally the second axis of the first solution Cm1 is calculated, which is rather the rotation angle to bring the machining point on the tool contact point.

$$C_{m1} = \theta - \varphi$$

Thus obtaining the first solution Xm1 and Cm1.
With reference to Fig. 18, the second solution is calculated starting from the first solution:

$$X_{m2} = -X_{m1}$$

$$C_{m2} = \pi - \theta - \varphi$$

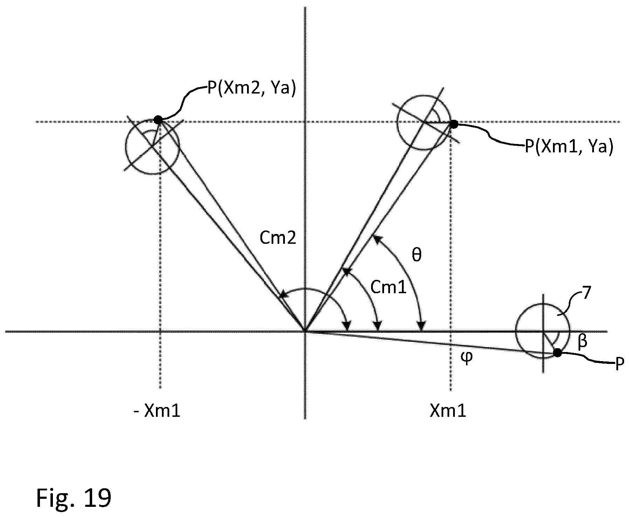

Fig. 19 illustrates an exemplary situation showing the two solutions.
The point P is the tool point to reach.
$P_1$ *and* $P_2$ are the calculated two possible solution (contact points) for a given $Y_a$.
$X_{m1}$ *and* $X_{m2}$ are the two positions for Xm axis.
$C_{m1}$ *and* $C_{m2}$ are the two positions for Cm axis.
$C_{m1}$ is calculated with the formulas above starting from the programmed point P and its centre, but it is in fact exactly the same angle $\beta$.

3. Choice of correct solution

Both calculated solutions are mathematically correct, and it is necessary to choose the correct one for machining.

The solution depends on which side the tool, for example a grinding wheel, is located with respect to the workpiece.
It is assumed that the tool is and stays at the right side of the stub. Of course, the same method could be applied for the left side.
First the positions of the stub centre are calculated with the calculated Cm axis positions.

$$X_{r1} = X_0 * \cos\left(C_{m1}\right) - Y_0 * \cos\left(C_{m1}\right)$$

$$X_{r2} = X_0 * \cos\left(C_{m2}\right) - Y_0 * \cos\left(C_{m2}\right)$$

$$Y_{r1} = X_0 * \sin\left(C_{m1}\right) + Y_0 * \cos\left(C_{m1}\right)$$

$$Y_{r2} = X_0 * \sin\left(C_{m2}\right) + Y_0 * \cos\left(C_{m2}\right)$$

The tool must be on the right side with respect to the stub. This is the most important constraint and if it is not fulfilled the solution is discarded. At least one solution always fulfils this constraint. This will be selected.
If both solutions are on the correct side, in this case the right side, the solution to choose is the one which has the minimum slope between tool centre and stub centre.

$$S_1 = \left| Y_{r1} - Y_a \right|$$

$$S_2 = \left| Y_{r2} - Y_a \right|$$

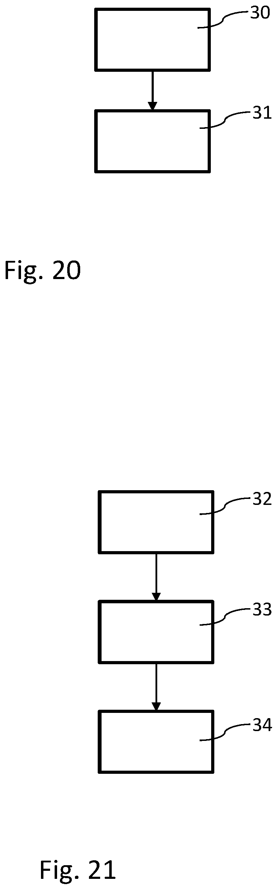

The solution found should be just in front of the stub.
Although the method is described using a small tool, it is not restricted nor limited to such tool. When using a big tool, the same benefits are achieved. The method could further be applied to all kind of machining, milling, grinding, turning etc.
The method enables machining with a small tool without the negative effects on the processing machine, like vibrations, and the machining quality.
An exemplary method according to one aspect is described in Fig. 20. The following steps are repeated several times during a complete revolution of the workpiece. The calculation of more contact points during one revolution results usually in a smoother machining.
A first step 30 comprises calculating during operation the coordinates of a contact point P between the tool and the workpiece with respect to the axis of rotation Cm, the first axis Xm and a third axis Ym that is perpendicular to the first axis Xm and the axis of rotation Cm.
After calculation of the coordinates of the contact point P the tool is moved 31 along the three axes according to the calculated coordinates.

In one aspect the first step 30 of calculating the coordinates of a contact point P comprises three sub steps.

In a first sub step 32 the Y position of the contact point is calculated. The calculation is for example described with respect to the Fig. 16.

In a second sub step 33 the two solution pairs for the Cm and Xm coordinates are calculated as for example described with reference to the Figs. 17 and 18.

In third sub step 34, the correct solution is selected from the two solutions as for example described with reference to the Fig. 19.

**REFERENCE NUMERALS**

| | |
|---|---|
| 1 | processing machine |
| 2 | small tool |
| 3 | concave stub/shape |
| 5 | workpiece |
| 6 | big tool |
| 7 | eccentric stub/shape |
| 8 | tool corridor |
| 10 | lathe |
| 11 | headstock |
| 12 | spindle |
| 13 | footstock |
| 20 | tool unit |
| 21 | wheelhead |
| 22 | tool |
| 30 | step of calculating coordinates |
| 31 | step of moving tool |
| 32 | sub step of calculating Y coordinate |
| 33 | sub step of calculating solution pairs |
| 34 | sub step of choosing correct solution |
| Xm | machine axis in X direction |
| Ym | machine axis in Y direction |
| Zm | machine axis in Z direction |
| Cm | rotation axis of workpiece |
| B | rotation axis of tool along Ym |
| Xp, Yp | programmed coordinates of contact point |

**Claims**

1. A Method for operating a processing machine (1), wherein a workpiece (5) is rotated in the processing machine (1) along an axis of rotation (Cm) and a tool (2; 6; 22) for processing the workpiece (5) is moved along a first axis (Xm) that is transversal, in particular perpendicular, to the axis of rotation (Cm) and a second axis (Zm) that is parallel to the axis of rotation (Cm), comprising:

   calculating (30) during operation the coordinates of a contact point (P) between the tool and the workpiece (5) with respect to the axis of rotation (Cm), the first axis (Xm) and a third axis (Ym) that is transversal, in particular perpendicular, to the first axis (Xm) and the axis of rotation (Cm); and
   moving (31) the tool along the three axes according to the calculated coordinates.

2. The method of claim 1, wherein calculating the coordinate of the contact point (P) comprises:

   calculating (32) a coordinate (Ya) of the tool for the third axis (Ym);
   calculating (33) the two solutions for the coordinates for the axis of rotation (Cm) and the first axis (Xm) of the contact point (P) between the tool and the workpiece; and
   selecting (34) the correct solution from the two calculated solutions.

3. The method of claim 2, wherein calculating a coordinate of the tool comprise:
   calculating the coordinate for the third axis (Ym) of the center of the tool (Ya) to equal the coordinate for the third axis (Ym) of the center of the machined stub of the workpiece.

4. The method of claim 2, wherein calculating the two solutions for the coordinates comprise:
   calculating the polar coordinates of the contact point (P) between the tool and the workpiece based on the Cartesian coordinates of the stub and the calculated coordinate (Ya) for the third axis (Ym) of the center of the tool.

5. The method of claim 4, wherein the second solution is calculated based on the first solution of polar coordinates.

6. The method of claim 2, wherein selecting the correct solution is at least partially based on which side of the workpiece the tool is located.

7. The method of any one of claims 1 to 6, wherein the diameter of the tool (2) is smaller than the diameter of the workpiece (5) and/or a stub (3; 7) of the workpiece (5) .

8. The method of any one of claims 1 to 7, wherein the processing machine (1) comprise a lathe or a grinding machine; and/or the tool is a grinding wheel.

9. A processing machine (1), wherein a workpiece (5) is rotated in the processing machine (1) along an axis of rotation (Cm) and a tool (2; 6; 22) for processing the workpiece (5) is moved along a first axis (Xm) that is transversal, in particular perpendicular, to the axis of rotation (Cm) and a second axis (Zm) that is parallel to the axis of rotation (Cm), comprising:

calculating (30) during operation the coordinates of a contact point (P) between the tool and the workpiece (5) with respect to the axis of rotation (Cm), the first axis (Xm) and a third axis (Ym) that is transversal, in particular perpendicular, to the first axis (Xm) and the axis of rotation (Cm); and

moving (31) the tool along the three axes according to the calculated coordinates.

10. The processing machine of claim 9, wherein the processing machine is a lathe or a grinding machine.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

30

31

Fig. 20

32

33

34

Fig. 21

Europäisches
Patentamt

European
Patent Office

Office européen
des brevets

## EUROPEAN SEARCH REPORT

**Application Number**

EP 20 17 5854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/077341 A1 (PAN XUHUA [CN]) 3 July 2008 (2008-07-03) * See paragraphs [0006] - [0015] of the enclosed machine translation.; figure 3 * ----- | 1-10 | INV. G05B19/18 B23Q15/00 B24B5/42 B24B19/12 |
| X | US 2005/222706 A1 (MURAKI TOSHIYUKI [JP] ET AL) 6 October 2005 (2005-10-06) * See figures 2, 7-14, 17-20 and the corresponding passages of the description. * ----- | 1-10 | |
| A | US 2002/155790 A1 (IDO MASAHIRO [JP] ET AL) 24 October 2002 (2002-10-24) * the whole document * ----- | 1-10 | |

**TECHNICAL FIELDS
SEARCHED        (IPC)**

G05B
B23Q
B24D
B24B

The present search report has been drawn up for all claims

| Place of search | Date of completion of the search | Examiner |
|---|---|---|
| The Hague | 16 November 2020 | Tsirigkas, Dimitrios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                   

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 20 17 5854

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2020

| Patent document cited in search report | Publication date | Patent family member(s) | Publication date |
|---|---|---|---|
| WO 2008077341 A1 | 03-07-2008 | CN 1994672 A<br>WO 2008077341 A1 | 11-07-2007<br>03-07-2008 |
| US 2005222706 A1 | 06-10-2005 | CN 1677292 A<br>EP 1582951 A2<br>JP 2005288563 A<br>US 2005222706 A1 | 05-10-2005<br>05-10-2005<br>20-10-2005<br>06-10-2005 |
| US 2002155790 A1 | 24-10-2002 | EP 1251415 A2<br>JP 2002307268 A<br>KR 20020082403 A<br>US 2002155790 A1 | 23-10-2002<br>23-10-2002<br>31-10-2002<br>24-10-2002 |

EPO FORM P0459

For more details about this annex : see Official Journal of the European Patent Office, No. 12/82